# EUROPÄISCHE PATENTANMELDUNG

(11) **EP 1 973 057 A1**
(43) Veröffentlichungstag der Anmeldung: **24.09.2008**
(21) Anmeldenummer: 07005742.7
(22) Anmeldetag: 21.03.2007
(51) Int. Cl.: G06K 7/10, G06K 19/06

(54) **Vorrichtung zum Kennzeichnen und Identifizieren von Gegenständen**

(71) Anmelder: Gent, Hartmut, 91052 Erlangen (DE)
(72) Erfinder: Gent, Hartmut, 91052 Erlangen (DE)
(74) Vertreter: Benz, Jürgen

(57) **Zusammenfassung**

Die Erfindung betrifft eine Vorrichtung, bzw. ein Labellingsystem zum Kennzeichnen und Identifizieren von Gegenständen mittels Röntgenstrahlung, wobei die Kennzeichnung durch Schrift, Symbole, Zahlen oder Grafik erfolgt und üblicherweise Informationen über den Gegenstand und / oder seiner Herkunft umfasst. Die Kennzeichnung beruht im wesentlichen auf der Aufbringung der entsprechenden Zeichen auf ein Werkstück, das ein Trägermaterial umfasst, welches Röntgenstrahlung nicht oder nur geringfügig absorbiert, während die Zeichen selbst, die auf dem Werkstück angebracht oder in dem Werkstück untergebracht sind, im wesentlichen aus einem Material bestehen, das Röntgenstrahlung absorbiert oder zumindest stärker absorbiert als das Werkstück selbst.

## Beschreibung

Die Erfindung betrifft eine Vorrichtung, bzw. ein Labellingsystem zum Kennzeichnen und Identifizieren von Gegenständen mittels Röntgenstrahlung, wobei die Kennzeichnung durch Schrift, Symbole, Zahlen oder Grafik erfolgt und üblicherweise Informationen über den Gegenstand und / oder seiner Herkunft umfasst. Diese Kenndaten, können so am oder im Gegenstand angebracht sein, dass sie mit bloßem Auge nicht mehr erkennbar, aber mittels einer geeigneten Röntgeneinrichtung lesbar und identifizierbar sind.

Die Kennzeichnung beruht im wesentlichen auf der Aufbringung der entsprechenden Zeichen auf ein Werkstück, das ein Trägermaterial umfasst, welches Röntgenstrahlung nicht oder nur geringfügig absorbiert, während die Zeichen selbst, die auf dem Werkstück angebracht oder in dem Werkstück untergebracht sind, im wesentlichen aus einem Material bestehen, das Röntgenstrahlung absorbiert oder zumindest stärker absorbiert als das Werkstück selbst, so dass bei Einstrahlung mit Röntgenlicht ein signalarmes, schwarzes bzw. dunkles Negativbild oder -relief der gewählten Schrift, Zeichen oder Bilder entsteht. Das entsprechend gekennzeichnete Werkstück kann erfindungsgemäß an oder in Gegenständen, vorzugsweise in nicht sichtbarer Weise angebracht werden.

Die fortschreitende Globalisierung bringt es mit sich, dass immer mehr Waren und Gegenstände über Straßen, Schienen und vor allem auf dem Luftweg zu ihren Bestimmungsorten transportiert werden müssen. Dabei ist es notwendig oder zumindest sinnvoll, dass bestimmte Daten über die Ware oder den Gegenstand zu jeder Zeit bekannt sind, oder problemlos festgestellt werden können, wenn sie benötigt werden. Derartige geeignete Daten geben Auskunft beispielsweise über
- Eigentum / Besitz der Ware bzw. des Gegenstandes
- Herkunfts- / Herstellungsort der Ware bzw. des Gegenstandes
- Bestimmungs-/ Zielort der Ware bzw. des Gegenstandes
- Zusammensetzung der Ware bzw. des Gegenstandes
- Physikalische und chemische Eigenschaften der Ware bzw. des Gegenstandes
- Gefahren- , bzw. Sicherheitsinformationen über die Ware bzw. den Gegenstand.

Zu diesen Zwecken werden die Waren oder Gegenstände entsprechend gekennzeichnet oder ausgeschildert. In einfachsten Fall geschieht dies durch direkt mit dem bloßen Auge direkt lesbare oder mit entsprechenden Geräten lesbare oder entschlüsselbare Etiketten verschiedenster Form und Formatierung (z. B. Strichcode, Mikro-Chips), die auf verschiedenste Weise an dem Gegenstand oder der Ware angebracht sind. Solche Etikettierungen können, sofern sie nur für Transportzwecke gedacht sind, in der Regel nach erfolgtem Transport mehr oder weniger leicht entfernt werden, so dass durch sie weiterhin keine optische oder anderweitige Beeinträchtigung erfolgen kann.

Für zahlreiche Waren oder Gegenstände ist es aber notwendig oder aber wünschenswert, dass sie dauerhaft mit den entsprechenden Kenndaten, insbesondere bezüglich Angaben zu Besitz und Eigentum des Gegenstandes, versehen bleiben, so dass sie, falls sie abhanden kommen oder missbräuchlich entwendet werden, aufgespürt und identifiziert werden können. Waren, die dauerhaft gekennzeichnet bleiben sollen, sind in der Regel materiell oder technologisch hochwertig oder stellen für seinen Besitzer einen hohen ideellen Wert dar. Derartige Waren sind beispielsweise Fahrzeuge jeglicher Art, insbesondere Autos, Motor- und Fahrräder, aber auch andere vorzugsweise mobile Wertgegenstände, wie Kameras, Laptops/Computer, Schmuck, Uhren aber auch Gepäckstücke jeglicher Art.
Bei dieser Art von Gegenständen ist aber vorrangig wichtig, dass sie identifizierbar sind, wobei es aus ästhetischen aber vor allem auch aus Gründen der Sicherheit wünschenswert ist, dass das Kennzeichen oder Label nicht oder nicht leicht sichtbar bzw. identifizierbar ist.
Was den Sicherheitsaspekt betrifft, ist es besonders wichtig, dass das Label entweder gar nicht entdeckt werden und / oder nicht entfernt werden kann. Somit scheiden übliche Markierungen oder Kennzeichnungen, die optisch sichtbar und mit den bloßem Auge wahrgenommen werden können für diese Anwendung aus.

In neuerer Zeit werden für derartige Zwecke oft Mikrochips eingesetzt, die den Vorteil haben, dass sie klein genug sind um nicht sofort entdeckt zu werden, aber auch in der Lage sind, eine große Menge an Informationen und Daten gespeichert zu halten. Mikrochips sind aber oft sehr empfindlich gegenüber Beschädigungen und lassen sich zudem leicht manipulieren. Überdies können sie meist nicht völlig verborgen an oder in dem Gegenstand angebracht werden, weil sie sonst nicht oder nur umständlich abgelesen bzw. eingelesen werden können. Aus diesem Grund sind sie für den festen Einbau in Gegenstände nur dann geeignet, wenn diese entsprechend leicht auseinander zu nehmen sind.

Somit bestand die Aufgabe und ein Bedürfnis, für die letztgenannten Anwendungen, insbesondere für die beschriebene Identifizierung von Waren und Gegenständen, die abhanden oder entwendet worden sind, ein Kennzeichnungs- und Identifizierungssystem zur Verfügung zu stellen, welches die genannten bislang bekannten und im Stand der Technik beschriebenen Nachteile nicht aufweist und überdies technisch einfach realisierbar ist.

Die Aufgabe wurde durch die Bereitstellung eines Labellingsystems bzw. einer entsprechenden Vorrichtung entsprechend der Ansprüche und der folgenden Beschreibung gelöst.

Gegenstand der Erfindung ist somit ein Werkstück oder ein Formkörper, der ein entsprechendes Werkstück enthält, auf dem sich oder in dem sich Kenndaten und Informationen über den Gegenstand, wie zum Beispiel technische Daten über seine Zusammensetzung sein physikalisch/chemisches Verhalten, Sicherheitshinweise, oder über seine Herkunft (Besitzerdaten, Markenname, Firmen-Logo, Kontaktadressen) in Form von Schriftzügen, graphischen Zeichen, Zahlen, Symbolen, Bildelementen oder Kombinationen von diesen befinden.

Das Werkstück oder der Formköper sind dabei und aus einem Material gefertigt ist, dass Röntgenstrahlung nicht oder nur geringfügig absorbiert oder aber zumindest deutlich weniger absorbiert als das Material aus dem die Kennzeichnung gefertigt ist. Das Material der Kennzeichnung, also die numerischen und alphanumerischen Zeichen, Symbole und Bildelemente, bestehen erfindungsgemäß aus einem Material, welches Röntgenstrahlung vollständig oder teilweise absorbiert oder zumindest stärker absorbiert als das Trägermaterial des Werkstückes, so dass besagte Schriftzüge, Zeichen, Symbole oder Grafiken in einer Röntgeneinrichtung ein gegenüber der Umgebung der Kennzeichnung signalarmes, dunkles oder grau bis schwarzes lesbares Absorptionsrelief liefern.

Als Trägermaterial, aus dem das Werkstück gefertigt ist, sind generell alle Stoffe geeignet, die Röntgenstrahlen nicht oder nicht wesentlich absorbieren. Geeignet sind Metalle wie Nicht-Metalle, vorzugsweise Nicht-Metalle, wie zum Beispiel Kunststoffe, insbesondere transparente Kunststoffe und Plexigläser, Karbonfasern, Stoffe aus Kunstfasern oder auch Naturstoffe wie Leder oder Holz. Auch Verbundstoffe aus zwei oder mehreren dieser Materialien ist denkbar. Bevorzugt sind hochtransparente Kunststoffe oder transparente Materialien, die Karbonfasern enthalten.

Die Trägerschicht bzw. das Werkstück sollte je nach Einsatzgebiet und technischen Voraussetzungen ausreichende Festigkeit und Stabilität aufweisen; dementsprechend ist ihre Dicke je nach verwendetem Material und Verwendungszweck zwischen 2 und 30 mm, vorzugsweise zwischen 2 und 5 mm. Weiterhin kann das erfindungsgemäße Werkstück unterschiedliche Größen und geometrische zwei- bzw. dreidimensionale Formen je nach Verwendungszweck aufweisen.

Wie bereits genannt, bestehen die Kenndaten in Form von Schrift- und / oder Bildelementen aus Röntgenstrahlung absorbierendem Material. Dieses Material wird mittels unterschiedlicher im Stand der Technik an sich bekannter Techniken auf oder in das Trägermaterial des Werkstückes an- oder eingebracht, wie unten näher beschrieben

Die Dicke bzw. Stärke der Schicht aus dem die Kennzeichnung besteht, sollte mindestens 0.05 mm betragen um eine ausreichende Absorption der Röntgenstrahlen und deren Detektierbarkeit zu gewährleisten. Bevorzugte Schichtdicken liegen zwischen 0.5 und 3 mm, vorzugsweise zwischen 1.0 und 2.0 mm. In besonderen Fällen können auch deutlich größere Schichtdicken verwendet werden, wobei gegebenenfalls auch die Dicke des Trägermaterials des Werkstückes entsprechend erhöht sein sollte. Letztlich hängt die notwendige Schichtdicke von der Empfindlichkeit bzw. der Auflösung der verwendeten Röntgeneinrichtung ab. Bei Verwendung medizinischer hoch auflösender Röntgengeräte genügen geringe Dicken (< 1 mm) der Kennzeichnung um diese lesbar detektieren zu können. Meistens stehen weniger empfindlichere Röntgendurchleuchtungseinrichtungen zur Verfügung, wie beispielsweise auf Flughäfen, Zollinspektionen, Häfen usw. In diesen Fällen sind meist nicht zu dünne Schichtdicken (> 1 mm) notwendig, um befriedigende Resultate zu erhalten.

Die Größe der Kennzeichnungen, also der Schrift, Zeichen und Symbole, richtet sich zweckmäßigerweise nach der Größe des Werkstückes auf dem sie angebracht oder in dem sie untergebracht sind. Bei sehr kleinen Ausführungen kann es notwendig sein, neben der Röntgenerfassung zusätzlich optische oder elektronische Hilfsmittel einzusetzen, um die Zeichen identifizieren zu können.

Das Material für die Kennzeichnung besteht erfindungsgemäß zu 50 - 100% aus einem die Röntgenstrahlung vollständig oder weitestgehend absorbierenden Material, welches vorzugsweise reines Blei (99-100%) oder eine Legierung mit hohem Bleianteil ist.

Das Röntgenstrahlen absorbierende Material für die Kennzeichnung, vorzugsweise das Blei bzw. die Bleilegierung, kann in einer einfachen Ausführungsform als Folie oder dünnes Blech mit einer Dicke von 0.5 bis 3 mm, vorzugsweise 1 - 1.5 mm vorliegen. Die entsprechende Kennzeichnung kann dann erhalten werden durch Herausschneiden, Herausfräsen oder Herausstanzen aus dieser Folie oder dem Blech. Das so erhaltene Positiv-Schablone des Schriftzuges, der Zeichen, Symbole oder des Bildelementes kann dann in einfacher Weise mit dem Röntgenstrahlen nicht absorbierenden Werkstück verbunden bzw. an ihm angebracht werden, beispielsweise durch Kleben oder andere an sich bekannten Techniken, die letztlich von den zum Einsatz kommenden Materialien abhängig ist.

Das Röntgenstrahlen absorbierende Material, vorzugsweise das Blei bzw. die Bleilegierung, kann aber auch erfindungsgemäß als Pulver oder Granulat zur Verwendung kommen.
Derartige Pulver oder Granulate sollten erfindungsgemäß eine durchschnittliche Korngröße im Bereich von 0.05 bis 0.75 mm, vorzugsweise von 0.1 - 0.3 mm aufweisen und sind im Handel erhältlich. Liegt das Material für die Kennzeichnung als Pulver oder Granulat vor, so kann es bis zu 50%, vorzugsweise bis zu 10% Füll- und / oder Binderstoffe und ggf. weitere Hilfsstoffe enthalten. Die Füllstoffe dienen dazu bei größeren Schichtdicken der Kennzeichnung an Blei oder Bleilegierung zu sparen, sofern noch eine ausreichende Absorption gewährleistet ist.

Als Binderstoffe sind erfindungsgemäß Stoffe und Materialien gemeint, welche dazu dienen, das Bleipulver oder Bleigranulat in der Weise zu formulieren, das es, gegebenenfalls zusammen mit einem Füllstoff, zu einer pastenartigen Masse verarbeitet werden kann, welche sich gut verformen lässt, so dass daraus die entsprechende Kennzeichnung in Form von Zeichen, Symbolen in einfacher Weise geformt, bzw. angefertigt und auf das Trägermaterial des Werkstückes aufgetragen werden kann.
Das Bindermaterial soll dabei bewirken, dass die Masse aushärtet und vorzugsweise mit der Oberfläche des Werkstückes verklebt oder an dieser zumindest anhaftet. Derartige Materialien sind bekannt. Beispiele sind handelsübliche Lacke, Firnisse, Kleber oder Versiegelungsmaterialien wie Siegellacke und dergleichen, welche in der Regel an der Luft erhärten. Möglich sind aber auch polymerisierende Substanzen, die mit dem Pulver oder Granulat vermischt werden und bei Einwirkung von Licht, Temperatur oder Katalysatoren unter Einschluss der Pulvers/Granulats polymerisieren und somit verhärten und dabei in der Regel mit dem Untergrund (Werkstück) eine Verbindung eingehen.

Ein entsprechen behandeltes pastenartiges Pulver/Granulat kann nunmehr direkt als in entsprechend der Schrift, Zeichen, Bilder geformten Masse auf das Werkstück aufgebracht werden. Die Formgebung kann dabei durch eine Negativ-Schablone, welche die Kennzeichnung in gewünschter bzw. notwendiger Strichdicke und Tiefe durch eine entsprechend geformte Aussparung aufweist, erfolgen. Dabei wird eine Schablone auf das Werkstück aufgelegt, die den Kennzeichnungen nachempfundene Vertiefungen bzw. Aussparungen in der Schablone werden mit der pastenartigen bleihaltigen Masse ausgefüllt, und die Schablone wird nach Verfestigung bzw. Aushärtung der Masse entfernt, so dass ein Positiv-Profil des Röntgenstrahlen absorbierenden Materials auf dem Werkstück verbleibt und mit diesem fest verbunden ist. Gegebenenfalls kann die als erhabenes Profil entstandene Kennzeichnung auch zusätzlich mit der Oberfläche des Röntgenstrahlung durchlässigen Werkstückes verklebt werden.

Generell kann erfindungsgemäß ein derartiges "positives" erhabenes Profil auch durch andere Verfahren und Techniken auf dem Werkstück aufgebracht werden.

In einer weiteren und besonders bevorzugten Ausführungsform wird das als Vorlage dienende Negativ-Profil der Kennzeichnung nicht durch eine entsprechende Schablone generiert, sondern das Werkstück selbst weist ein entsprechendes Negativ-Profil der Kennzeichnung durch entsprechendes Ausfräsen, Gravieren, Schneiden, Ritzen, Ätzen und anderer geeigneter Techniken auf. Die Tiefe der ausgesparten Profils kann der Dicke des Werkstückes entsprechen, geht also durch dieses vollständig hindurch (d.h. das Werkstück selbst stellt eine Negativ-Schablone dar), in den meisten Fällen ist es aber angebracht, die Dicke des Werkstückes größer zu wählen als die Tiefe der Aussparung.

In der besonders bevorzugten Ausführungsform ist die Dicke des Werkstückes größer als die Tiefe der Aussparung, welche wiederum der Schichtdicke der gewünschten Kennzeichnung entspricht und, wie oben angegeben, zwischen 0.5 und 3 mm, vorzugsweise zwischen 1.0 und 2.0 mm liegt. Die Breite der Aussparung, welche der Breite der Kennzeichnung entspricht kann größer, gleich oder kleiner als die Relieftiefe sein, vorzugsweise ist sie jedoch etwa gleich.

Nach dem Einritzen, Eingravieren, Einätzen, Ausfräsen (die verwendete Technik hängt letztlich von den Materialeigenschaften des Werkstückes ab) der Schrift, Zeichen, Bilder etc. in das Werkstück wird erfindungsgemäß das Bleipulver oder Bleigranulat vorzugsweise als wie oben beschriebene erhältliche Masse in die erzeugte, der Kennzeichnung nachgebildeten Aussparung eingebracht und bündig mit der Oberfläche des Werkstückes abgeschlossen. Hierdurch ist die Röntgenstrahlung absorbierende Schicht haltbar geschützt. Durch eine vorzugsweise transparente Folie, die selbstklebend oder auch durch einen Klebstoff auf der Oberseite des Werkstückes angebracht ist, oder auch durch einen Abschlusslack auf der Oberseite des Werkstückes kann die Röntgenstrahlung absorbierende, vorzugsweise bleihaltige Schicht weiter geschützt werden, was insbesondere von Vorteil ist, wenn nur ein Pulver oder Granulat ohne Bindemittel in die erzeugten Aussparungen auf dem Werkstück gefüllt wird.

Das erfindungsgemäße Werkstück kann direkt an oder in dem zu kennzeichnenden Gegenstand Platz finden, wobei seine Unterbringung je nach Erfordernis und / oder Praktikabilität erfolgt. Es kann aber vorteilhaft sein, das Werkstück mit einer Verkleidung oder Ummantelung zu versehen, welche dann an dem Gegenstand angebracht oder in ihm untergebracht wird und deren stoffliche Zusammensetzung Röntgenstrahlung nur geringfügig absorbieren sollte.

In einer besonderen Ausführungsform ist die Verkleidung bzw. Ummantelung ein je nach Bedarf unterschiedlich großer Formkörper, der beispielsweise aus einem vorzugsweise undurchsichtigen aber Röntgenstrahlen durchlassenden Kunststoffmaterial, einem geeigneten Metall oder auch aus Holz gefertigt ist. So kann zum Beispiel der Formkörper ein geformtes undurchsichtiges Kunststoffharz sein, in welches das erfindungsgemäße Werkstück eingegossen ist. In einem anderen Beispiel ist das erfindungsgemäße Werkstück in einen hölzernen oder aus einem anderen Material bestehenden geformten Hohlkörper passgenau eingebracht, der irreversibel oder reversibel verschlossen werden kann. Der Formkörper kann dabei mit dem Gegenstand fest oder lösbar verbunden sein, wobei er, falls gewünscht, aus Tarnungsgründen auch ein integraler Bestandteil des Gegenstandes oder der Ware sein kann. So kann das Werkstück bzw. der ihn enthaltende Formkörper in vorhandenen Griffen, im Rahmen oder Gestellen, bzw. in anderen festeren Teilen eines Gepäckstückes untergebracht werden. Der Formkörper kann aber auch in ein Gepäckstück, beispielsweise ein Koffer, hineingelegt werden, oder mit diesem in andere Weise reversibel verbunden werden.

### Generell lassen sich folgende erfindungsgemäße Formköper unterscheiden:

Werkstück im verschlossenen Formkörper (nicht zugänglich und ohne Röntgen nicht sichtbar)
(a) Werkstück in halbseitigem Formkörper fixiert, dergestalt, dass, wenn das Trägermaterial des Werkstücks transparent ist, es mit "face down" so in dem Formkörper fixiert werden kann, dass man die Kenndaten "seitenverkehrt" lesen bzw. identifizieren kann.
(b) Werkstück in halbseitigem Formkörper fixiert, dergestalt, dass, wenn das Trägermaterial des Werkstücks transparent ist, es mit "face up" so in dem Formkörper fixiert werden kann, dass man die Kenndaten "seitenrichtig" lesen bzw. identifizieren kann. Das setzt voraus, dass das Werkstück auf der Seite der Aussparung (z.B. Gravur) ein "Coating" der Verfüllung mit dem Röntgenstrahlung absorbierenden Material besitzt.
(c) Werkstück mit seitenverkehrter Fräsung/Gravur der Kenndaten in halbseitigem Formkörper fixiert, dergestalt, dass, wenn das Trägermaterial des Werkstücks transparent ist, es mit "face down" so in dem Formkörper fixiert werden kann, dass man die Kenndaten "seitenrichtig" lesen kann.

Für die Identifizierung von gestohlenen mobilen Gegenständen, wie Fahrrädern oder Autos, sollte das erfindungsgemäße Werkstück bzw. der das Werkstück enthaltene Formkörper auf vorteilhafte Weise auf den ersten Blick unerkannt und nach Möglichkeit (bei Entdeckung) nicht leicht entfernbar untergebracht sein. So kann es beispielsweise mit wichtigen baulichen Elementen des Gegenstandes (z.B. Rahmen oder Karosserie eines Fahrzeuges) nachträglich oder von Anfang an fest verbunden werden, so dass seine Entfernung oder Manipulation nur mit einer starken Beschädigung oder Zerstörung des Gegenstandes einhergeht.

Mit Hilfe der vorliegenden Erfindung können somit verloren gegangene oder gestohlene Gegenstände oder Waren später selbst dann wieder identifiziert werden, wenn sie in der Zwischenzeit verändert wurden.

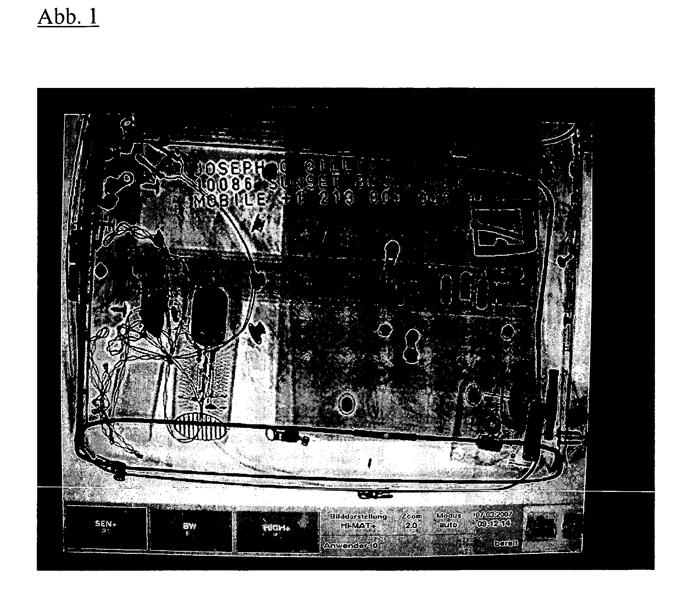

Für die Identifizierung der so gekennzeichneten Gegenstände wird erfindungsgemäß eine Röntgeneinrichtung benötigt, welche vorzugsweise zwischen 10 und 150 KeV liefern sollte. Solche Röntgengeräte werden standardmäßig bei allen Sicherheitseinrichtungen auf Flughäfen oder Bahnhöfen eingesetzt. Abbildung 1 zeigt eine mittels einer auf einem Flughafen eingesetzten Röntgen-Durchleuchtungseinrichtung erstellte Aufnahme eines Aktenkoffers, welcher in seinem Inneren ein erfindungsgemäßes Werkstück enthält.

Es können auch entsprechend ausgerüstete Hand - Röntgenscanner verwendet werden, die ebenfall bereits gebräuchlich sind.

Zusammengefasst ist somit Gegenstand der Erfindung:
- Eine Vorrichtung zur Kennzeichnung und Identifizierung von Gegenständen umfassend im wesentlichen ein Werkstück, auf oder in dem sich Kenndaten und Informationen über den Gegenstand und / oder seiner Herkunft in Form von Schriftzügen, graphischen Zeichen, Zahlen, Symbolen, Bildelementen oder Kombinationen von diesen befinden und aus einem Material gefertigt ist, dass Röntgenstrahlung nicht oder nur geringfügig absorbiert, wobei die graphischen Zeichen, die Schriftzüge, die Zahlen, Symbole oder Bildelemente aus einem Material bestehen, welches Röntgenstrahlung vollständig oder teilweise absorbiert oder zumindest stärker absorbiert als das Trägermaterial des Werkstückes, so dass besagter Schriftzug, Zeichen, Symbole oder Bildelemente ein dunkles oder schwarzes lesbares Absorptionsrelief in einer Röntgeneinrichtung liefern;
- ein entsprechendes Werkstück, bei welchem das Röntgenstrahlen absorbierende Material auf oder in dem Trägermaterial des Werkstückes elementares Blei oder eine bleihaltige Legierung enthält, wobei dieses Material als Folie, Blech oder auch als Granulat bzw. Pulver vorliegt;
- ein entsprechendes Werkstück, bei welchem das Röntgenstrahlen absorbierende Material zusätzlich Hilf-, Füll- und /oder Bindemittel in Form von Versiegelungen, Lacken, Harzen, Klebstoffen, polymerisierenden Stoffen und ähnlich wirkenden Stoffen enthält, wobei ein solches Material vorzugsweise bei Verwendung von (bleihaltigen) Pulvern oder Granulaten eingesetzt wird.
- ein entsprechendes Werkstück, bei welchem die Oberfläche des Trägermaterials des Werkstückes eine Reliefstruktur in Form des Schriftzuges, des Zeichens oder des Bildelementes der Kenndaten aufweist;
- ein entsprechendes Werkstück, bei welchem besagte Reliefstruktur erhaben (positives Relief oder Profil) ist und durch das Röntgenstrahlen absorbierende Material selbst gebildet wird;
- ein entsprechendes Werkstück, bei welchem besagte Reliefstruktur eine Vertiefung in der Oberfläche des Werkstückes ist (negatives Relief oder Profil), in der sich das Röntgenstrahlen absorbierende Material befindet;
- ein entsprechendes Werkstück, bei welchem die Breite und Tiefe der Reliefstruktur eine mittlere Breite und Tiefe zwischen 0.5 und 3.0 mm aufweist;
- ein entsprechendes Werkstück, welches eine Dicke von 2 bis 15 mm aufweist;
- ein Formkörper, bestehend aus einem Material, welches Röntgenstrahlung nicht oder geringfügig absorbiert und ein wie oben und in den Ansprüchen beschriebenes Werkstück enthält;
- ein entsprechender Formkörper, der ein Hohlkörper ist oder an seiner Oberfläche eine Aussparung aufweist, wobei der Hohlraum im Inneren des Hohlkörpers bzw. die Aussparung an der Oberfläche passgenau von dem besagten Werkstück eingenommen wird;
- ein entsprechender Formkörper, der mit dem Werkstück eine unzertrennbare Einheit bildet, oder eine Verschlussvorrichtung aufweist, die es ermöglicht, das Werkstück zu entnehmen;
- eine Verwendung des beschriebenen Werkstückes oder Formkörpers zum Kennzeichnen und Identifizieren von Gegenständen; sowie
- ein Verfahren zum Kennzeichnen und Identifizieren eines Gegenstandes, dass dadurch gekennzeichnet ist, dass man den Gegenstand mit einem Werkstück bzw. einem Formkörper wie oben oder in den Ansprüchen beschrieben, ausstattet und ihn dadurch mit Kenndaten versieht, ihn mittels einer geeigneten Röntgeneinrichtung durchleuchtet und die Kenndaten als dunkles Absorptionsrelief identifiziert.

Das beschriebene Labellingsystem kann, wie bereits erläutert, auf vielen Gebieten eingesetzt werden entsprechend der vielseitigen möglichen Kennzeichnungen von Waren und Gegenständen und ihrer gewünschten Verwendungen, insbesondere Wiederbeschaffung nach Verlust oder Diebstahl bei hochwertigen und teuren Konsumgütern.

Die Kennzeichnung und Identifizierung von Gegenständen kann neben der oben beschriebenen erfindungsgemäßen technischen Lösung prinzipiell auch durch eine modifizierte technische Variante erfolgen, bei welcher ein Werkstück aus mindestens zwei unterschiedlichen mit einander verbundenen Materiallagen oder -schichten (A), (B) besteht, die Röntgenstrahlen unterschiedlich stark absorbieren, wobei mindestens eine erste Lage oder Schicht (A) aus einem Material gefertigt ist, welches Röntgenstrahlung vollständig oder teilweise absorbiert (vorzugsweise Blei oder ein bleihaltiges Metall), und diese Lage oder Schicht Kenndaten in Form von Zahlen und / oder Buchstaben und / oder graphischen Zeichen, Bildern oder Symbolen in Form einer Gravur oder Prägung aufweist, und mindestens eine zweite Lage oder Schicht (B) aus einem Material gefertigt ist, welches Röntgenstrahlen nicht oder wenigstens schwächer absorbiert als die Schicht (A) (vorzugsweise Kunststoff, Karbonfaser, Holz, etc.), so dass an den bearbeiteten Stellen der (bleihaltigen) Schicht (A) die Röntgenstrahlen ungehindert durchtreten können, und die eingravierten Zeichen im Röntgenbild im Verhältnis zur Schicht (A) ein signalreiches, helles Absorptionsrelief liefern, wobei die Tiefe der Gravur in der Röntgenstrahlen absorbierenden Schicht (A) vorzugsweise etwa 80 - 100% der Dicke dieser Schicht beträgt. In Bezug auf die Materialeigenschaften und physikalischen Voraussetzungen gelten die oben gemachten Angaben in äquivalenter Weise.

## Patentansprüche

1. Vorrichtung zur Kennzeichnung und Identifizierung von Gegenständen umfassend im wesentlichen ein Werkstück, auf oder in dem sich Kenndaten und Informationen über den Gegenstand und / oder seiner Herkunft in Form von Schriftzügen, graphischen Zeichen, Zahlen, Symbolen, Bildelementen oder Kombinationen von diesen befinden, und aus einem Material gefertigt ist, dass Röntgenstrahlung nicht oder nur geringfügig absorbiert, **dadurch gekennzeichnet,**
**dass** der Schriftzug, die graphischen Zeichen, die Zahlen, Symbole oder Bildelemente aus einem Material bestehen, welches Röntgenstrahlung vollständig oder teilweise absorbiert oder zumindest stärker absorbiert als das Trägermaterial des Werkstückes, so dass besagter Schriftzug, Zeichen, Symbole oder Bildelemente ein dunkles oder schwarzes lesbares Absorptionsrelief in einer Röntgeneinrichtung liefern.

2. Werkstück nach Anspruch 1, **dadurch gekennzeichnet, dass** das Röntgenstrahlen absorbierende Material elementares Blei oder eine bleihaltige Legierung enthält.

3. Werkstück nach Anspruch 2, **dadurch gekennzeichnet, dass** das Blei oder die bleihaltige Legierung in Form eines Granulats oder Pulvers vorliegt.

4. Werkstück nach einem der Ansprüche 1 - 3, **dadurch gekennzeichnet, dass** das Röntgenstrahlen absorbierende Material zusätzlich Hilfsstoffe, Füllstoffe und /oder Bindemittel enthält.

5. Werkstück nach einem der Ansprüche 1 - 4, **dadurch gekennzeichnet, dass** das Röntgenstrahlen absorbierende Material auf oder in dem Trägermaterial des Werkstückes eine Dicke zwischen 0.5 und 5.0 mm aufweist.

6. Werkstück nach einem der Ansprüche 1 - 6, **dadurch gekennzeichnet, dass** die Oberfläche des Trägermaterials des Werkstückes eine Reliefstruktur in Form des Schriftzuges, des Zeichens oder des Bildelementes der Kenndaten aufweist

7. Werkstück nach Anspruch 6, **dadurch gekennzeichnet, dass** die Reliefstruktur erhaben ist und durch das Röntgenstrahlen absorbierende Material selbst gebildet wird.

8. Werkstück nach Anspruch 6, **dadurch gekennzeichnet, dass** die Reliefstruktur eine Vertiefung in der Oberfläche des Werkstückes darstellt, in der sich das Röntgenstrahlen absorbierende Material befindet.

9. Werkstück nach einem der Ansprüche 6-8, **dadurch gekennzeichnet, dass** die Breite und Tiefe der Reliefstruktur einen mittlere Breite und Tiefe zwischen 0.5 und 3.0 mm aufweist.

10. Werkstück nach einem der Ansprüche 1 - 9, **dadurch gekennzeichnet**, das es eine Dicke von 2 bis 15 mm aufweist.

11. Formkörper, bestehend aus einem Material, welches Röntgenstrahlung nicht oder geringfügig absorbiert, **dadurch gekennzeichnet, dass** er ein Werkstück gemäß einem der Ansprüche 1 - 10 enthält.

12. Formkörper nach Anspruch 11, **dadurch gekennzeichnet, dass** er ein Hohlkörper ist oder an seiner Oberfläche eine Aussparung aufweist, wobei der Hohlraum im Inneren des Hohlkörpers bzw. die Aussparung an der Oberfläche passgenau von dem besagten Werkstück eingenommen wird.

13. Formkörper nach Anspruch 11 oder 12, **dadurch gekennzeichnet, dass** er mit dem Werkstück eine unzertrennbare Einheit bildet, oder eine Verschlussvorrichtung aufweist, die es ermöglicht, das Werkstück zu entnehmen.

14. Verwendung eines Werkstückes oder eines Formkörpers gemäß einem der Ansprüche 1 - 13 zum Kennzeichnen und Identifizieren von Gegenständen.

15. Verfahren zum Kennzeichnen und Identifizieren eines Gegenstandes, **dadurch gekennzeichnet, dass** man den Gegenstand mit einem Werkstück bzw. einem Formkörper gemäß einem der Ansprüche 1-13, ausstattet und ihn dadurch mit Kenndaten versieht, ihn mittels einer geeigneten Röntgeneinrichtung durchleuchtet und die Kenndaten als dunkles Absorptionsrelief identifiziert.
